# EUROPÄISCHE PATENTSCHRIFT

(11) **EP 1 110 850 B1**
(45) Veröffentlichungstag und Bekanntmachung des Hinweises auf die Patenterteilung: **18.02.2004**
(21) Anmeldenummer: 00124446.6
(22) Anmeldetag: 08.11.2000
(51) Int. Cl.: B62D 33/067

(54) **Kippvorrichtung für Fahrerhäuser von Lastkraftwagen**
Tilting device for driver's cab for lorries
Dispositif de basculement pour cabines de chauffeurs de camions

(30) Priorität: 20.12.1999 DE 19961443
(43) Veröffentlichungstag der Anmeldung: 27.06.2001
(73) Patentinhaber: Weber-Hydraulik GmbH, 74363 Güglingen (DE)
(72) Erfinder: Schulz, Ulrich, Brackenheim-Stockheim (DE)
(74) Vertreter: Säger, Manfred, Dipl.-Ing.

(56) Entgegenhaltungen:
- EP-A- 0 099 157
- EP-A- 0 736 443
- DE-A- 19 504 719

## Beschreibung

Die Erfindung betrifft eine Kippvorrichtung für Fahrerhäuser von Lastkraftwagen oder dergleichen gemäß dem Oberbegriff des Hauptanspruchs.

Solche gattungsgemäßen Kippvorrichtungen sind bekannt (EP-A-0 0099157). Bei dieser bekannten Vorrichtung ist zwar Sicherheit gegen Rohrbrüche vorhanden.

Von Nachteil ist jedoch, daß diese Sicherheit über eine aufwändige Schaltung erkauft wird. So sind insgesamt drei Wege vorhanden und insgesamt drei Rückschlagventile in diesen Wegen vorgesehen.

Der Erfindung liegt die Aufgabe zu Grunde, eine gattungsgemäße Vorrichtung gemäß dem Oberbegriff des Hauptanspruchs bei gleicher Sicherheit einfacher auszugestalten.

Diese Aufgabe wird bei einer gattungsgemäßen Vorrichtung nach dem Oberbegriff des Hauptanspruchs erfindungsgemäß durch dessen kennzeichnende Merkmale gelöst.

So wird auch bei einem Rohrbruch mit der erfindungsgemäßen Kippvorrichtung sichergestellt, daß zumindest ein Kolben eines der beiden Hydraukikzylinder das gesamte Gewicht des Fahrerhauses bei einem Rohrbruch aufnimmt. Es sind hierzu aber nur zwei Rückschlagventile, also eines weniger wie beim Stand der Technik erforderlich. So ist die erfindungsgemäße Kippvorrichtung nicht nur einfacher herzustellen, sondern wegen der geringeren Anzahl von Bauteilen auch störunanfälliger.

Zweckmässige Ausgestaltungen und Weiterbildungen der Erfindung sind in den Unteransprüchen gekennzeichnet.

Ein Ausführungsbeispiel der Erfindung wird nachfolgend unter Bezugnahme auf die Zeichnung näher erläutert. In dieser zeigt:
- Figur 1: einen schematischen Schaltplan der erfindungsgemäßen Kippvorrichtung;
- Figur 2: eine Einzelheit des ersten und zweiten Rückschlagventils, im schematischen Schnitt und grösserem Massstab und
- Figur 3: eine Zusatzbeschaltung bei Verwendung eines Hydraulilzylinders mit einer Umlaufverbindung

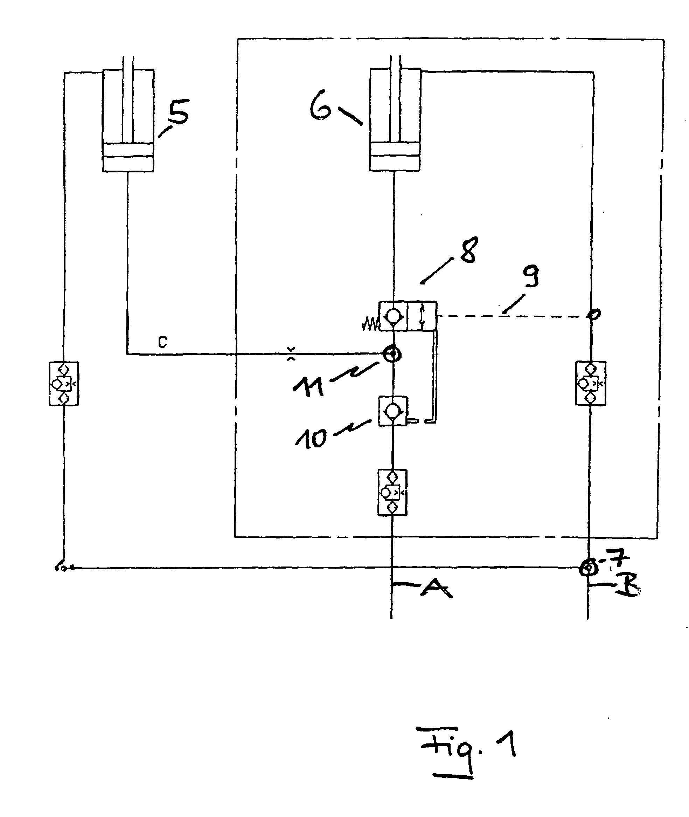

Beim wiedergegebenen Ausführungsbeispiel gemäß Figur 1 sind zwei doppelt wirkende Hydraulikzylinder 5, 6 vorgesehen, die mit einer Vorlaufleitung A beim Kippen sowie einer Rücklaufleitung B versehen sind, die beide über ein nicht gezeigtes Umschaltventil wahlweise mit dem Tank, bzw. einer Pumpe verbindbar sind. Die beiden beim Kippen des nicht gezeigten Fahrerhauses als Rücklaufleitung B zum Tank dienenden Leitungen sind an der Stelle 7 zusammengeschaltet. Ferner ist in der Zuleitung zu dem einen Hydraulikzylinder 6 in der -das Kippen des Fahrerhauses bewirkenden- Vorlaufleitung A ein hydraulisch entsperrbares, zu dem kolbenseitigen Zylinderraum 18 der Druckseite des Hydraulikzylinders 6 ein hin öffnendes erstes Rückschlagventil 8 vorgesehen, dessen Steuerleitung 9 mit der Rücklaufleitung B verbunden ist. Dem anderen Hydraulikzylinder 5 ist ein zu diesem hin öffnendes zweites Rückschlagventil 10 zugeordnet, das von dem ersten Rückschlagventil 8 verzögert mechanisch gesteuert entsperrbar ist. Dieses zweite Rückschlagventil 10 ist in Strömungsrichtung beim Kippen zur Druckseite des kolbenseitigen Zylinderrraums 18 des einen Hydraulikzylinders 6 in der Zuleitung A vor dem hydraulisch entsperrbaren ersten Rückschlagventil 8 angeordnet.

Zwischen dem hydraulisch entsperrbaren ersten Rückschlagventil 8 und dem zweiten Rückschlagventil 10 ist die zum Kippen dienende Zuleitung C zur Druckseite des anderen Hydraulikzylinders 5 an der Abzweigstelle 11 abgezweigt.

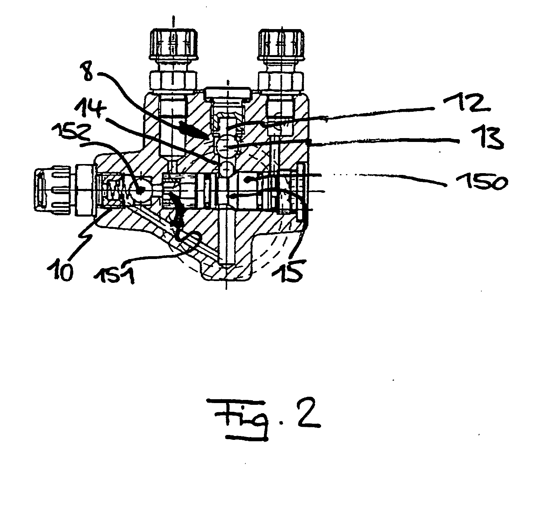

Das erste gesteuert entsperrbare Rückschlagventil 8 sowie das zweite Rückschlagventil 10 sind in schematischer Darstellung in Figur 2 mit deren gemeinsamen Betätigungsglied 150 zum mechanischen Entsperren der Rückschlagventile 8, 10 dargestellt. Das erste gesteuert entsperrbare Rückschlagventil 8 weist eine auf seinen Sitz mittels der Kraft einer Feder 12 gedrückte Kugel 13 mit einem vorgegebenen Durchmesser auf. Diese wird von ihrem Sitz von einer Kugel 14 mit kleinerem Durchmesser abgehoben, wenn letztere kleinere Kugel von einer Ausgangslage mit Abstand von der grösseren Kugel 13 längs einer Schrägfläche 15 des gemeinsamen Betätigungsgliedes 150 in Form eines Schiebers angehoben wird. Erst danach kommt die Spitze 151 des gemeinsamen Betätigungsgliedes 150 an einer dritten Kugel 152 des zweiten hydraulisch entsperrbaren Rückschlagventil 10 zur Anlage und hebt diese von ihrem Sitz unter Ensperrung des zweiten Rückschlagventils verzögert gesteuert ab. Diese Schaltung stellt eine besonders einfache und sinnfällige Ausgestaltung der mechanisch verzögerten Steuerung dar.

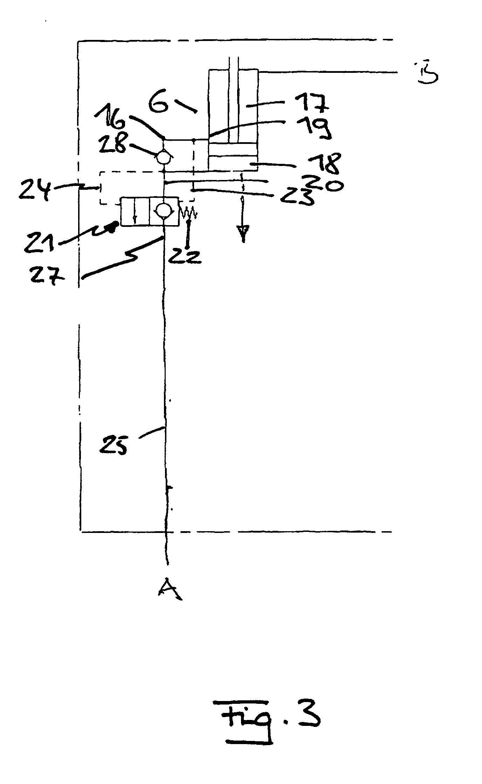

In Figur 3 ist eine Zusatzschaltung für den Hydraulikzylinder 6 dargestellt, wenn eine im Bereich kurz vor der Ausgangslage des Kolbens in der Zylinderwand mündende, von dem Kolben überfahrbare Umlaufverbindung 16 vorgesehen ist, die den kolbenstangenseitigen, ringraumförmigen Zylinderraum 17 über die Mündung mit dem kolbenseitigen Zylinderraum 18 druckseitig verbindet. Hierbei ist in der Umlaufverbindung 16 ein zu deren Mündung 19 hin schliessendes Rückschlagventil 28 vorgesehen. Ausserdem ist an dem kolbenseitigen Zylinderraum 18 mit seinem einen Anschluss 20 ein Zweiwege-Zweipositionsventil 21 angeschlossen, welches in seiner mit der Kraft einer Feder 22 belasteten Ausgangslage sperrt und in der anderen Lage durchgeschaltet ist und eine in Richtung der Kraft der Feder 22 wirkende, von dem kolbenstangenseitigen Zylinderraum 17 gesteuerte erste Drucksteuerleitung 23 und eine demgegenüber entgegengesetzt zum Entsperren wirkende, von dem kolbenseitigen Zylinderraum 18 gesteuerte zweite Drucksteuerleitung 24 aufweist. Der andere Anschluss 27 des einen Zweiwege-Zweipositionsventils 21 ist an dem beim Zurückkippen gemeinsamen Rücklauf A mittels einer Bypass-Leitung 25 angeschlossen.

Das Zweiwege-Zweipositionsventil 21 kann hierbei mit seinem einen Anschluss 20 an den kolbenseitigen Zylinderraum 18 des einen Hydraulikzylinders 6 über die Umlaufverbindung 16 angeschlossen sein.

Die Wirkungsweise der erfindungsgemäßen Kippvorrichtung gemäß Figur 1 ist wie folgt: beim Kippen (gezeichnete Lage) wird in der Zuleitung A Hydraulikflüssigkeit unter Druck zugeführt. Beide Rückschlagventile 8 und 10 öffnen sich und die beiden Kolben in den beiden Hydraulikzylindern 5, 6 werden angehoben. Über die Rücklaufleitung B wird die im kolbenstangenseitigen Zylinderraum 17 verdrängte Hydraulikflüssigkeit zum nicht gezeigten Tank abgeleitet. Beim Zurückkippen wirkt die Rücklaufleitung B als Vorlaufleitung und das hydraulisch entsperrbare erste Rückschlagventil 8 wird geöffnet. Bei dessen Öffnen wird - verzögert - mechanisch das zweite Rückschlagventil 10 entsperrt, sodaß über dieses der gemeinsame Volumenstrom an Hydraulikflüssigkeit zu dem Tank über die Drossel 26 abfliessen kann. Figur 2 zeigt im schematischen Querschnitt den verzögert wirkenden mechanischen Steuerablauf des ersten und zweiten Rückschlagventils 8 bzw. 10.

Figur 3 zeigt eine Zusatzschaltung, welche nur wirksam wird, sobald der Kolben beim Zurückkippen die Mündung 19 der Umlaufverbindung 16 in der Wandung des einen Hydraulikzylinders 6 überfahren hat, wenn sich also der Kolben in dem sogenannten Schwinghub-Bereich befindet. In diesem Moment wird das ansonsten stets geschlossene Zweiwege-Zweipositionsventil 21 mittels der zweiten Steuerleitung 24 geöffnet, sodaß über den anderen Anschluss 27 dieses Zweiwege-Zweipositionsventils 21 die Hydrraulikflüssigkeit zum Tank abfliessen kann.

## Patentansprüche

1. Kippvorrichtung für Fahrerhäuser von Lastkraftwagen oder dergleichen, mit zwei doppelt wirkenden Hydraulikzylindern (5, 6) mit einem in der zum Kippen dienenden Zuleitung (A) zur Druckseite des einen Hydraulikzylinders (6) vorgesehenen, hydraulisch entsperrbaren ersten Rückschlagventil (8), das in Richtung zu dem einen Hydraulikzylinder (6) hin öffnet und dessen Steuerleitung (9) an die als Rücklaufleitung (B) dienende Leitung angeschlossen ist, und mit einem in der zum Kippen dienenden Zuleitung (A) zur Druckseite des anderen Hydraulikzylinders (5) vorgesehenen zweiten Rückschlagventil (10), das in Richtung zu dem anderen Hydraulikzylinder (5) hin öffnet,
**dadurch gekennzeichnet,**
- **daß** das zweite Rückschlagventil (10) in Strömungsrichtung beim Kippen zur Druckseite des einen Hydraulikzylinders (6) in der Zuleitung (A) vor dem hydraulisch entsperrbaren ersten Rückschlagventil (8) angeordnet ist,
- **daß** das zweite Rückschlagventil (10) als entsperrbares Rückschlagventil ausgebildet ist, das von dem ersten Rückschlagventil (8) bei dessen Entsperren gesteuert entsperrbar ist.
- und **daß** die zum Kippen dienende Zuleitung (C) zur Druckseite des anderen Hydraulikzylinders (5) von einer Abzweigstelle(11) zwischen dem ersten Rückschlagventil (8) und dem zweiten Rückschlagventil (10) abzweigt.

2. Vorrichtung nach Anspruch 1, **dadurch gekennzeichnet, daß** das erste und/oder das zweite Rückschlagventil (8 bzw. 10) hydraulisch angesteuert ist.

3. Vorrichtung nach Anspruch 2, **dadurch gekennzeichnet, daß** das die Schließglieder (13 bzw. 152) des ersten und des zweiten Rückschlagventils (8 bzw. 10) über ein gemeinsames Betätigungsglied (150) mechanisch gesteuert entsperrbar sind.

4. Vorrichtung nach einem der Ansprüche 1 bis 3, **dadurch gekennzeichnet, daß** das zweite Rückschlagventil (10) als von dem ersten Rückschlagventil (8) verzögert entsperrbar gesteuert ist.

5. Vorrichtung nach Anspruch 4, **dadurch gekennzeichnet, daß** das erste Rückschlagventil (8) eine auf seinen Sitz mittels der Kraft einer Feder (12) gedrückte Kugel (13) als Schließglied mit einem vorgegebenen Durchmesser aufweist, daß diese über eine weitere Kugel (14) mit kleinerem Durchmesser von einer Schrägfläche (15) des gemeinsamen Betätigungsgliedes (150) abgehoben wird, welche kleinere Kugel (14) in der Ausgangslage einen Abstand von der grösseren Kugel (13) aufweist, und daß die Spitze (151) des gemeinsamen Betätigungsgliedes (150) erst danach das als Kugel (151) ausgebildete Schließglied des zweiten Rückschlagventils (10) abhebt.

6. Vorrichtung nach einem der Ansprüche 1 bis 5, **dadurch gekennzeichnet, daß** an dem einen und/oder dem anderen Hydraulikzylinder (5 bzw. 6) im Bereich kurz vor der Ausgangslage des Kolbens eine in der Zylinderwand mit einer Mündung (19) mündende, von dem Kolben überfahrbare Umlaufverbindung (16) vorgesehen ist, die den kolbenstangenseitigen ringraumförmigen Zylinderraum (17) über die Mündung (19) mit dem kolbenseitigen, die Druckseite bildenden Zylinderraum (18) verbindet.

7. Vorrichtung nach Anspruch 6, **dadurch gekennzeichnet, daß** in der Umlaufverbindung (16) ein zu deren Mündung (19) hin schliessendes Rückschlagventil (28) vorgesehen ist.

8. Vorrichtung nach Anspruch 7, **dadurch gekennzeichnet, daß** an den kolbenseitigen Zylinderraum (18) mit seinem einen Anschluss (20) ein Zweiwege-Zweipositionsventil (21) angeschlossen ist, welches in seiner mit der Kraft einer Feder (22) belasteten Ausgangslage sperrt und in der anderen Lage durchgeschaltet ist und eine in Richtung der Kraft der Feder (22) wirkende, von dem kolbenstangenseitigen Zylinderraum (17) gesteuerte erste Drucksteuerleitung (23) und eine demgegenüber entgegengesetzt zum Entsperren wirkende, von dem kolbenseitigen Zylinderraum (18) gesteuerte zweite Drucksteuerleitung (24) aufweist.

9. Vorrichtung nach Anspruch 8, **dadurch gekennzeichnet, daß** das Zweiwege-Zweipositionsventil (21) mit seinem anderen Anschluß (27) an den beim Zurückkippen gemeinsamen Rücklauf (A) mittels einer Bypass-Leitung (25) angeschlossen ist.

10. Vorrichtung nach Anspruch 8 oder 9, **dadurch gekennzeichnet, daß** das Zweiwege-Zweipositionsventil (21) an den kolbenseitigen Zylinderraum (18) mit seinem einen Anschluss (20) über die Umlaufverbindung (16) angeschlossen ist.

## Claims

1. Tilting device for the driver's cab of a heavy goods vehicle or the like, with two double-acting hydraulic cylinders (5,6), with a first hydraulically-releasable check valve (8), which is disposed in the supply line (A) serving the tilting movement on the pressure side of the one hydraulic cylinder (6), which opens in the direction towards the one hydraulic cylinder (6), and of which the control line (9) is connected to the line serving as a return line (B); and with a second check valve (10), which is disposed in the supply line (A) serving the tilting movement on the pressure side of the other hydraulic cylinder (5), which opens in the direction towards the other hydraulic cylinder (5),
**characterised in that**,
- the second check valve (10) is disposed in the supply line (A), in the direction of flow for tilting, in front of the hydraulically-releasable, first check valve (8), on the pressure side of the one hydraulic cylinder (6),
- that the second check valve (10) is designed as a releasable check valve, which can be released in a controlled manner by the first check valve (8) when the first check valve is released,
- and that the supply line (C), which serves the tilting movement at the pressure side of the other hydraulic cylinder (5) branches off from a branching position (11) between the first check valve (8) and the second check valve (10).

2. Device according to claim 1, **characterised in that** the first and/or the second check valve (8 and/or 10) is controlled hydraulically.

3. Device according to claim 2, **characterised in that** the closing elements (13 and/or 152) of the first and the second check valve (8 and/or 10) can be released in a mechanically controlled manner via a common actuating element (150).

4. Device according to any one of claims 1 to 3, **characterised in that** the second check valve (10) can be released in a delayed manner controlled by the first check valve (8).

5. Device according to claim 4, **characterised in that** the first check valve (8) provides a ball (13) of a predetermined diameter as the closing element, which is pressed onto its seating by the force of the spring (12), that this ball is raised, via another ball (14) with a smaller diameter, by an inclined surface (15) of the common actuating element (150), the smaller ball (14) being disposed in the neutral position at a distance from the larger ball (13), and that the tip (151) of the common actuating element (150) only afterwards raises the closing element of the second check valve (10) designed as the ball (151).

6. Device according to any one of claims 1 to 5, **characterised in that**, in one and/or the other of the hydraulic cylinders (5 and/or 6), in the region shortly in front of the neutral position of the piston, a circuit connection (16) is provided, which flows into an outlet (19) in the cylinder wall over which the piston can travel, and which connects the rod-side, annular cylinder chamber (17) via the outlet (19) to the piston-side cylinder chamber (18), which forms the pressure side.

7. Device according to claim 6, **characterised in that** a check valve (28) is provided in the circuit connection (16), which closes in the direction towards the outlet (19) of the circuit connection.

8. Device according to claim 7, **characterised in that** a two-way, two-position valve (21) is connected to the piston-side cylinder chamber (18) with its one connection (20), which blocks in its neutral position subject to the force of the spring (22), which allows a through-connection in the other position, and which provides a first pressure control line (23) acting in the direction of the force of the spring (22) and controlled from the rod-side cylinder chamber (17); and a second pressure control line (24) acting in opposition to the latter to allow the release, which is controlled from the piston-side cylinder chamber (18).

9. Device according to claim 8, **characterised in that** to allow tilting back, the two-way, two-position valve (21) is connected with its other connection (27), via a bypass line (25), to the common return line (A).

10. Device according to claim 8 or 9, **characterised in that** the two-way, two-position valve (21) is connected with its one connection (20), via the circuit connection (16), to the piston-side cylinder chamber (18).

## Revendications

1. Dispositif de basculement pour cabines de conducteur de camions ou analogues, comprenant deux cylindres hydrauliques à double effet (5, 6), un premier clapet anti-retour (8) pouvant être débloqué hydrauliquement, prévu dans la conduite d'arrivée (A) servant au basculement, qui aboutit au côté pression du premier cylindre hydraulique (6), clapet qui s'ouvre en direction du premier cylindre hydraulique (6) et dont la conduite de commande (9) est raccordée à la conduite servant de conduite de retour (B), et un deuxième clapet anti-retour (10) prévu dans la conduite d'arrivée (A) servant au basculement, qui aboutit au côté pression de l'autre cylindre hydraulique (5), clapet qui s'ouvre en direction de l'autre cylindre hydraulique (5),
**caractérisé**
- **en ce que** le deuxième clapet anti-retour (10) est disposé dans la conduite d'arrivée (A) en amont du premier clapet anti-retour (8) pouvant être débloqué hydrauliquement, dans le sens de l'écoulement vers le côté pression du premier cylindre hydraulique (6) qui se produit lors du basculement.
- **en ce que** le deuxième clapet anti-retour (10) est constitué par un clapet anti-retour déblocable qui peut être débloqué en étant commandé par le premier clapet anti-retour (8) lors de son déblocage,
- et **en ce qu'**une conduite d'arrivée (C) servant pour le basculement, qui aboutit au côté pression de l'autre cylindre hydraulique (5), est piquée en un point de branchement (11) entre le premier clapet anti-retour (8) et le deuxième clapet anti-retour (10).

2. Dispositif selon la revendication 1, **caractérisé en ce que** le premier et/ou le deuxième clapet anti-retour (8, respectivement 10) est ou sont piloté(s) hydrauliquement.

3. Dispositif selon la revendication 2, **caractérisé en ce que** des obturateurs (13, respectivement 152) du premier et du deuxième clapets anti-retour (8, respectivement 10) peuvent être débloqués sous commande mécanique par l'intermédiaire d'un organe d'actionnement commun (150).

4. Dispositif selon une des revendications 1 à 3, **caractérisé en ce que** le deuxième clapet anti-retour (10) est piloté de façon à être débloqué avec temporisation par le premier clapet anti-retour (8).

5. Dispositif selon la revendication 4, **caractérisé en ce que** le premier clapet anti-retour (8) présente une bille (13) pressée sur son siège au moyen de la force d'un ressort (12), constituant un obturateur d'un diamètre prédéterminé, **en ce que** cette bille est soulevée, par l'intermédiaire d'une autre bille (14) de plus petit diamètre, par une surface oblique (15) de l'organe d'actionnement commun (150), laquelle plus petite bille (14) se trouve à une certaine distance de la plus grosse bille (13) dans la position de départ et **en ce que** ce n'est qu'après cela que la pointe (151) de l'organe d'actionnement commun (150) soulève l'obturateur du deuxième clapet anti-retour (10) formé par une bille (152).

6. Dispositif selon une des revendications 1 à 5, **caractérisé en ce que**, sur le premier et/ou sur l'autre cylindre hydraulique (5, respectivement 6), dans la zone se trouvant juste en avant de la position de départ du piston, est prévue une communication de circulation (16) qui débouche dans la paroi du cylindre par un orifice (19) et qui peut être franchie par le piston, communication qui relie la chambre de cylindre côté tige de piston (17) en forme de chambre annulaire, à la chambre de cylindre côté piston (18) qui forme le côté pression, par l'intermédiaire de l'orifice (19).

7. Dispositif selon la revendication 6, **caractérisé en ce que**, dans la communication de circulation (16), est prévu un clapet anti-retour (28) qui se ferme en direction de l'orifice (19) de cette communication.

8. Dispositif selon la revendication 7, **caractérisé en ce qu'**à la chambre de cylindre côté piston (18), est raccordée, par son premier raccord (20), une soupape à deux voies-deux positions (21) qui est fermée dans sa position de départ chargée par la force d'un ressort (22), et est ouverte dans son autre position, et présente une première conduite de commande de pression (23) agissant dans le sens de la force du ressort (22), commandée par la chambre de cylindre côté tige de piston (17), et une deuxième conduite de commande de pression (24) qui agit pour le déblocage, en sens inverse de la première et qui est commandée par la chambre de cylindre côté piston (18).

9. Dispositif selon la revendication 8, **caractérisé en ce que** la soupape à deux voies-deux positions (21) est raccordée par son autre raccord (27) au retour commun (A) lors du retour de basculement, au moyen d'une conduite de « bypass » (25).

10. Dispositif selon la revendication 8 ou 9, **caractérisé en ce que** la soupape à deux voies-deux positions (21) est raccordée à la chambre de cylindre côté piston (18) par son raccord (20) par l'intermédiaire de la communication de circulation (16).
